## Europäisches Patentamt

## European Patent Office

## Office européen des brevets

(11) Numéro de publication: **0 148 090**
**B1**

(12) **FASCICULE DE BREVET EUROPEEN**

(45) Date de publication du fascicule du brevet:
05.08.87

(51) Int. Cl.⁴: **C 04 B 7/36,** F 27 B 7/20

(21) Numéro de dépôt: **84402721.9**

(22) Date de dépôt: **27.12.84**

(54) **Procédé de fabrication de clinker de ciment en voie sèche avec précalcination.**

(30) Priorité: **03.01.84 FR 8400022**

(43) Date de publication de la demande:
**10.07.85 Bulletin 85/28**

(45) Mention de la délivrance du brevet:
**05.08.87 Bulletin 87/32**

(84) Etats contractants désignés:
**BE CH DE GB IT LI LU**

(56) Documents cités:
**DE - A - 2 835 009**
**FR - A - 2 527 588**

(73) Titulaire: **FIVES-CAIL BABCOCK, Société anonyme, 7 rue Montalivet, F-75383 Paris Cédex 08 (FR)**
Titulaire: **CEM COMPAGNIE ELECTRO-MECANIQUE Société Anonyme, 40, rue Jean-Jaurès, F-93176 Bagnolet Cedex (FR)**

(72) Inventeur: **Chenu, Christian, 125, Boulevard Richard Lenoir, F-75011 Paris (FR)**
Inventeur: **Benoit, Philippe, 157, avenue Sainte Cécile, F-59130 Lambersart (FR)**
Inventeur: **Chielens, Alain, 37, rue de la Briqueterie, F-59420 Mouvaux (FR)**

(74) Mandataire: **Fontanié, Etienne, FIVES-CAIL BABCOCK 7, rue Montalivet, F-75383 Paris Cedex 08 (FR)**

## Description

L'invention a pour objet un procédé de fabrication du clinker de ciment en voie sèche dans une installation comprenant une chambre de précalcination munie d'un dispositif d'injection de combustible, un four tubulaire rotatif équipé d'un brûleur à son extrémité de sortie du clinker et entraîné en rotation par un moteur et un refroidisseur de clinker.

Le but de la présente invention est d'optimiser la marche des installations de ce type en contrôlant le fonctionnement de la chambre de précalcination et l'état de la zone de clinkérisation du four de telle sorte que le réglage de l'un ne réagisse pas de façon défavorable sur l'autre.

Le procédé objet de la présente invention est caractérisé en ce que le débit d'alimentation en combustible du brûleur de four est maintenu égal à une valeur de consigne qui est la somme de deux termes: un terme de base qui est fonction du débit de combustible injecté dans la chambre de précalcination et un terme correctif qui est fonction d'un ou plusieurs paramètres représentatifs des conditions de la clinkérisation et choisis dans le groupe constitué par la teneur en oxydes d'azote des gaz d'échappement du four, la température de la zone de clinkérisation, la température des gaz d'échappement du four, le couple du moteur d'entraînement du four, la teneur en chaux libre du clinker et la teneur en oxyde de potassium de la matière au niveau de la boîte à fumées.

Le débit de combustible injecté dans la chambre de précalcination est réglé, comme connu en soi, de façon à maintenir le taux de décarbonatation des matières calcinées, à la sortie de ladite chambre, égale à une valeur de consigne.

Le taux de décarbonatation des matières calcinées est déterminé par un calculateur à partir de la température des gaz d'échappement de la chambre de précalcination ou de la température des matières à la sortie de la chambre.

De préférence, la température des gaz d'échappement de la chambre de précalcination est mesurée en deux points espacés l'un de l'autre sur le trajet de ces gaz, les valeurs mesuées sont comparées l'une à l'autre et à des valeurs de référence et si l'une de ces valeurs mesurées ne paraît pas vraisemblable, le calculateur choisit automatiquement l'autre valeur pour calculer le taux de décarbonatation des matières sortant de la chambre de précalcination. Si aucune des deux valeurs mesurées ne paraît vraisemblable, le débit combustible injecté dans la chambre de précalcination est réglé en fonction du débit d'alimentation en matières premières de l'installation.

La vitesse de rotation du four est réglée en fonction du débit d'alimentation en matières premières de l'installation et des variations du couple d'entraînement du four et de la température de la matière dans la zone de clinkérisation, de telle sorte que le niveau moyen de remplissage du four reste constant.

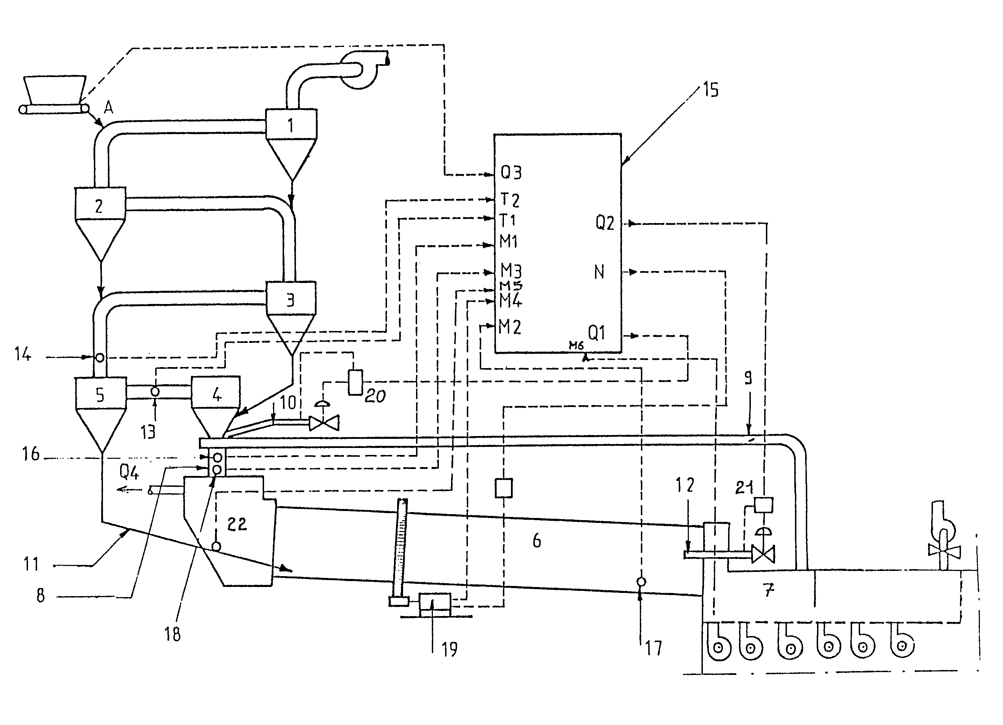

La description qui suit se réfère au dessin l'accompagnant qui est le schéma, donné à titre d'exemple, d'une installation de fabrication de clinker de ciment en voie sèche équipée d'un système de conduite automatisée permettant la mise en oeuvre de l'invention.

Cette installation comprend essentiellement un échangeur à cyclones 1, 2, 3, une chambre de précalcination 4, un cyclone 5 associé à celle-ci, un four tubulaire rotatif 6 et un refroidisseur de clinker 7.

Les matières premières crues, sous forme de farine, sont introduites en A dans l'étage supérieur de l'échangeur à cyclones. Dans celui-ci les matières sont chauffées par les gaz d'échappement du four 6 et de la chambre 4 jusqu'à la température de calcination. Elles sont ensuite partiellement décarbonatées. La chaleur nécessaire à cette réaction est fournie en partie par les gaz d'échappement du four 6 amenés à la chambre par une gaîne 8 et en partie par la combustion d'un mélange d'air et de combustible. L'air qui est prélevé sur le refroidisseur 7 est amené à la chambre par un conduit 9 et le combustible y est injecté au moyen d'une tuyère 10.

Les matières partiellement décarbonatées sont entraînées hors de la chambre 4 par les gaz d'échappement et transportés dans le cyclone 5 où elles sont séparées des gaz pour être introduites dans le four 6 au moyen d'un tuyau 11.

Dans le four, les matières qui se déplacent lentement d'une extrémité à l'autre, en sens inverse des gaz chauds produits par un brûleur 12, sont complètement calcinées et clinkérisées. Le clinker produit est refroidi dans le refroidisseur 7 au moyen d'air frais qui est ensuite utilisé comme air de combustion dans le four et dans la chambre de précalcination.

Pour optimiser le fonctionnement de cette installation, c'est à dire pour produire un clinker de qualité donnée avec une consommation minimale de combustible, il faut contrôler la marche de la chambre de précalcination et l'état de la zone de clinkérisation du four.

Le taux de décarbonatation des matières à la sortie de la chambre de précalcination 4 est maintenu égal à une valeur de consigne D en réglant le débit de combustible alimentant celle-ci. Pour cela, on mesure, au moyen de capteurs thermométriques 13 et 14, les températures T1 et T2 des gaz d'échappement à la sortie de la chambre de précalcination et du cyclone 5. A partir de T1 ou de T2, un calculateur 15 détermine la température T3 des matières à la sortie du cyclone 5 au moyen d'une relation numérique T3 = f (T1) ou T3 = f' (T2) qui est fonction de l'installation. La température T3 pourrait aussi être mesurée au moyen d'un capteur thermométrique placé sur la sortie des matières du cyclone 5.

A partir de T3, le calculateur détermine le taux de décarbonatation des matières sortant du cyclone 5 au moyen d'une relation numérique D' = g (T3) qui est fonction des caractéristiques des matières premières et peut être déterminée, par exemple, par calcul à partir de l'analyse de la matière première effectuée en laboratoire, matière première dont la composition chimique est maintenue la plus constante possible par dosage des composants réalisé à partir de l'analyse permanente des matières premières par fluorescence X.

Le calculateur 15 compare les valeurs D et D' et, si elles diffèrent, règle le débit de combustible Q1 fourni à la chambre de précalcination, au moyen d'un régulateur PI ou PID 20, pour rendre D' égal à D.

Le calculateur 15 compare en permanence les valeurs mesurées des températures T1 et T2. En cas de désaccord entre ces deux mesures, le calculateur détermine quelle est la mesure correcte au moyen de tests de niveau et utilise celle-ci pour le calcul de T3. Si aucune de ces mesures n'est correcte, le calculateur règle le débit de combustible Q1 fourni à la chambre de calcination en fonction du débit de matières premières Q3 suivant une relation Q1 = 1 (Q3) qui dépend de l'installation, de la nature des matières premières et du taux de décarbonatation visé et peut être, par exemple, un polynome de degré 1 à 4.

Le débit de combustible alimentant le brûleur 12 du four est maintenu égal, au moyen d'un régulateur PI ou PID 21, à une valeur de consigne Q2 qui est la somme de deux termes: un terme de base Q2' qui est fonction du débit de combustible Q1 fourni à la chambre de précalcination et un terme correctif Q2'' qui est fonction d'un ou plusieurs paramètres définissant l'état thermique du four dans la zone de clinkérisation.

Le terme Q2' est déterminé par le calculateur 15 au moyen d'une relation numérique Q2' = h (Q1). Cette relation dépend de l'installation, de la nature des matières premières et du combustible et du taux de décarbonatation D visé dans la chambre de précalcination et peut être un polynome de degré 1 à 4. Elle dépend également du débit des gaz d'échappement Q4, rapporté au débit total, prélevé au niveau de la boîte à fumées 22 du four pour être rejeté à l'atmosphère lorsque les matières premières et/ ou les combustibles contiennent des composés favorisant les concrétions (alcalis, soufre, etc.), pour limiter la quantité de ces composés dans le four. Ce débit relatif appelé «taux de by pass» est connu à partir d'une mesure.

Le terme Q2'', dont la valeur est petite par rapport à celle de Q2', est déterminé par le calculateur 15 au moyen de la relation numérique:

$$Q2'' = \Sigma_i \, ki \cdot Mi + \Sigma_i \, Li \cdot \frac{d \, Mi}{d \, t}$$

dans laquelle Mi représente l'un quelconque des paramètres suivants:

M1: concentration en oxydes d'azote des gaz d'échappement du four, ce paramètre étant mesuré au moyen d'une sonde 16 placée dans la gaine 8,

M2: température de la zone de clinkérisation mesurée au moyen d'un capteur 17,

M3: température du gaz d'échappement du four mesurée dans la gaine 8 au moyen d'un capteur 18,

M4: couple du moteur d'entraînement du four 19,

M5: quantité d'oxyde de potassium contenue dans la matière au niveau de la boîte à fumées 22,

M6: quantité de chaux libre dans le clinker, et Ki et Li sont des coefficients de pondération qui peuvent être nuls dans certains cas.

Les dérivées des paramètres sont utilisées pour accélérer le réglage (cas de la température de clinkérisation) ou pour anticiper et minimiser les variations de ces paramètres.

Cette relation pourra être corrigée en fonction de l'évolution des pertes thermiques de paroi et des entrées d'air parasite.

Par ailleurs, la vitesse de rotation du four N est réglée en fonction du débit Q3 des matières premières alimentant l'installation, de la variation par rapport à une valeur moyenne filtrée du couple d'entraînement du four ΔC déterminée par des moyens connus, par exemple par mesure des variations de l'intensité du courant électrique fourni au moteur 19 dans le cas d'un moteur à courant continu, et de la variation ΔT de la température de la matière dans la zone de clinkérisation par rapport à une valeur moyenne filtrée, suivant une relation N = (aQ3 + b) + k1 ΔC + k2 ΔT. Cette relation et la précédente permettent notamment de prendre en compte l'instabilité du collage de la matière en cours de clinkérisation (dérochetage).

On pourra éventuellement tenir compte, pour régler la vitesse de rotation du four, du degré de décarbonatation dans la chambre, de précalcination, du taux de poussières dans les gaz d'échappement et de la nature des matières premières.

L'équilibre des gaz dans l'installation est assuré par les réglages simultanés du tirage, du débit d'air chaud prélevé sur le refroidisseur de clinker pour alimenter la chambre de précalcination et de la pression dans le capot de chauffe du four, en agissant sur la vitesse du ventilateur de tirage, en modifiant les positions des registres placés sur la sortie des gaz d'exhaure et d'un volet placé sur le conduit 9 et en réglant le débit d'air frais insufflé dans le refroidisseur. Les consignes pour les valeurs de réglage de la vitesse du ventilateur de tirage et de la position du volet du conduit 9 sont déterminées par le calculateur 15, au moyen de relations numériques, en fonction de la teneur en oxygène des gaz à la sortie du cyclone 5 et à la sortie du four 6. La pression au capot de chauffe est réglée en fonction de la pression différentielle entre les deux chambres du refroidisseur de clinker et du débit d'air frais insufflé dans la première de ces chambres.

Dans l'installation décrite, la chambre de calcination et de four sont disposés en série, les gaz d'échappement du four traversant la chambre de calcination. On sait qu'il existe des installations où les gaz d'échappement du four ne sont mélangés aux gaz d'échappement de la chambre de calcination qu'à la sortie de celle-ci ou du cyclone qui la suit et des installations où les gaz d'échappement du four et ceux de la chambre de calcination suivent des trajets séparés dans des échangeurs distincts l'un de l'autre. Il doit être bien entendu que l'invention s'applique aussi à ces installations.

**Revendications**

1. Procédé de fabrication de clinker de ciment en voie sèche consistant à calciner, au moins partiellement, les matières premières dans une chambre de précalcination (4) munie d'un dispositif d'injection de combustible (10), le débit de combustible (Q1) injecté dans la chambre de précalcination (4) étant réglé de façon à maintenir le taux de décarbonatation des matières calcinées, à leur sortie de ladite chambre, égal à une valeur de consigne (D) et à traiter les matières calcinées pour les clinkériser dans un four tubulaire rotatif (6) équipé d'un brûleur (12) à son extrémité de sortie du clinker et entraîné en rotation par un moteur (19) caractérisé en ce que le débit d'alimentation en combustible du brûleur (12) du four est maintenu égal à une valeur de consigne (Q2) qui est la somme de deux termes: un terme de base (Q2') fonction du débit de combustible (Q1) injecté dans la chambre de précalcination (4) et un terme correctif (Q2'') qui est fonction d'un ou plusieurs paramètres représentatifs des conditions de clinkérisation et choisis dans le groupe constitué par la teneur en oxydes d'azote des gaz d'échappement du four (M1), la température de la zone de clinkérisation du four (M2), la température des gaz d'échappement du four (M3), le couple du moteur d'entraînement du four (M4), la teneur en oxyde de potassium de la matière au niveau de la boîte à fumées (M5) et la teneur en chaux libre du clinker (M6).

2. Procédé selon la revendication 1, caractérisé en ce que le terme de base (Q2') prend en compte le débit de gaz d'échappement (Q4) prélevé au niveau de la boîte à fumées (22) du four pour être rejeté à l'atmosphère.

3. Procédé selon la revendication 1 ou 2, caractérisé en ce qu'on mesure la température des gaz d'échappement de la chambre de précalcination (4) en deux points (13, 14) espacés l'un de l'autre sur le trajet de ces gaz, on compare les valeurs mesurées l'une à l'autre et à des valeurs de référence et si l'une des valeurs mesurées n'est pas vraisemblable on utilise l'autre valeur mesurée pour calculer le taux de décarbonatation des matières sortant de la chambre de précalcination.

4. Procédé selon la revendication 3, caractérisé en ce que, lorsqu'aucune des deux valeurs mesurées de la température (T1, T2) des gaz d'échappement de la chambre de calcination (4) n'est vraisemblable, le débit de combustible (Q1) injecté dans la chambre de précalcination (4) est réglé en fonction du débit d'alimentation (Q3) en matières premières de l'installation.

5. Procédé selon l'une quelconque des revendication 1 à 4, caractérisé en ce que la vitesse de rotation (N) du four est réglée en fonction du débit d'alimentation (Q3) en matières premières de l'installation et/ou des variations (ΔC) du couple d'entraînement du four et/ou des variations (ΔT) de la température de la matière dans la zone de clinkérisation du four.

6. Procédé selon l'une quelconque des revendications 1 à 5, caractérisé en ce que dans le terme (Q2'') l'un au moins des paramètres est associé à sa dérivée.

**Patentansprüche**

1. Trockenverfahren zur Zementklinkerherstellung, bestehend darin, die Rohstoffe in einem mit einer Brennstoffeinführungsvorrichtung (10) versehenen Vorcalcinierraum (4) mindestens teilweise zu calcinieren, wobei die in den Vorcalcinierraum (4) eingeführte Brennstoffmenge (Q1) so eingestellt ist, dass der Entsäuerungsgrad der calcinierten Stoffe am Vorcalcinierraumaustritt gleich einem Sollwert (D) gehalten wird, und die calcinierten Stoffe zu verarbeiten, indem sie in einem Drehrohrofen (6) klinkerisiert werden, der an seinem Klinkeraustrittsende mit einem Brenner (12) ausgerüstet und durch einen Motor (19) drehangetrieben ist, dadurch gekennzeichnet, dass die Brennstoffaufgabemenge des Offenbrenners (12) gleich einem Sollwert (Q2) gehalten wird, der die Summe von zwei Gliedern darstellt: einem Basisglied (Q2') das von der in den Vorcalcinierraum (4) eingeführten Brennstoffmenge (Q1) abhängig ist, und einem Korrekturglied (Q2''), das von einem oder mehreren Parametern abhängig ist, die für die Klinkerisierungsbedingungen typisch sind und in der Gruppe ausgewählt sind, die durch den Stickstoffoxidgehalt der Ofenabgase (M1), die Temperatur der Ofenklinkerisierungszone (M2), die Temperatur der Ofenabgase (M3), das Antriebsmoment des Ofenmotors (M4), den Kaliumoxidgehalt des Stoffes im Bereich des Rauchgaskastens (M5) und den Klinkerfreikalkgehalt (M6) gebildet wird.

2. Verfahren nach Anspruch 1, dadurch gekennzeichnet, dass das Basisglied (Q2') die Abgasmenge (Q4) berücksichtigt, die im Bereich des Ofenrauchgaskastens (22) abgezogen und in die freie Luft ausgestossen wird.

3. Verfahren nach Anspruch 1 oder 2, dadurch gekennzeichnet, dass man die Temperatur der Abgase des Vorcalcinierraums (4) an zwei in einem gewissen Abstand voneinander in der Strömung dieser Abgase befindlichen Stellen (13, 14) misst, man die gemessenen Werte miteinander und mit Bezugswerten vergleicht und, falls einer der gemessenen Werte nicht wahrscheinlich ist, man den anderen gemessenen Wert benutzt, um den Entsäuerungsgrad der Stoffe am Vorcalcinierraumaustritt zu berechnen.

4. Verfahren nach Anspruch 3, dadurch gekennzeichnet, dass, wenn keiner der beiden Messwerte der Temperatur (T1, T2) der Abgase des Vorcalcinierraums (4) wahrscheinlich ist, die Menge des in den Vorcalcinierraum (4) eingeführten Brennstoffs (Q1) in Abhängigkeit von der Rohstoffaufgabemenge (Q3) der Anlage eingestellt wird.

5. Verfahren nach irgendeinem der Ansprüche 1 bis 4, dadurch gekennzeichnet, dass die Drehzahl (N) des Ofens in Abhängigkeit von der Rohstoffaufgabemenge (Q3) der Anlage und/oder von den Veränderungen (ΔC) des Antriebsmoments des Ofens und/oder von den Veränderungen (ΔT) der Stofftemperatur in der Ofenklinkerisierungszone eingestellt wird.

6. Verfahren nach irgendeinem der Ansprüche 1 bis 5, dadurch gekennzeichnet, dass im Glied (Q2'') mindestens einer der Parameter mit seiner Ableitung verbunden ist.

**Claims**

1. Dry process for cement clinker manufacturing consisting in calcining, at least partially, raw materials in a precalcining chamber (4) fitted with a fuel injection device (10) the rate of fuel (Q1) injected into the precalcining chamber (4) being adjusted so as to keep the decarbonation rate of the calcined materials at the said chamber outlet equal to a preset value (D) and in processing the calcined materials to clinkerize them in a rotary tubular kiln (6) equipped with a burner (12) at its clinker discharge end and rotated by a motor (19), characterized by the fact that the fuel feeding rate to the kiln's burner (12) is maintained at a preset value (Q2) which is the sum of two terms: a basic term (Q2') which depends on the rate of fuel (Q1) injected into the precalcining chamber (4) and a corrective term (Q2'') which depends on one or several parameters representative of the clinkerizing conditions and selected from the group constituted by the nitrogen oxide content in the exhaust gases (M1), the temperature in the kiln's clinkerizing zone (M2), the temperature of the kiln's exhaust gases (M3), the kiln's drive motor torque (M4), the material's potassium oxide content inside the smoke box (M5) and the clinker's free lime content (M6).

2. Process according to claim 1, characterized by the fact that the basic term (Q2') takes into account the rate of the exhaust gases (Q4) taken from the kiln's smoke box to be discharged into the atmosphere.

3. Process according to claim 1 or 2, characterized by the fact that the temperature of the exhaust gases from the precalcining chamber (47 is measured at two points (13, 14) distant from each other on the path of these gases, that the measured values are compared to each other and to the reference values and that, if one of the measured values is not credible, the other measured value is used to calculate the decarbonation rate of the materials coming from the precalcining chamber.

4. Process according to claim 3, characterized by the fact that whenever none of the two measured temperature values (T1, T2) of the exhaust gases from the calcining chamber is not credible, the rate of fuel (Q1) injected into the precalcining chamber (4) is adjusted according to the raw materials feeding rate (Q3) to the installation.

5. Process according to anyone of claims 1 to 4, characterized by the fact that the kiln's rotation speed (N) is adjusted according to the raw materials feeding rate (Q3) to the installation and/or the variations ($\Delta$C) of the kiln's drive torque and/or the variations ($\Delta$T) of the material temperature in the kiln's clinkerizing zone.

6. Process according to anyone of claims 1 to 5, characterized by the fact that in the term (Q2'') at least one of the parameters is associated to its derivative.